Europäisches Patentamt

European Patent Office

Office européen des brevets

(11) Veröffentlichungsnummer: **0 481 169 A1**

## EUROPÄISCHE PATENTANMELDUNG

(21) Anmeldenummer: **91111064.1**

(22) Anmeldetag: **04.07.91**

(51) Int. Cl.5: **B05B 7/12**, B05B 5/053,
B29C 45/83

(30) Priorität: **15.10.90 DE 4032692**

(43) Veröffentlichungstag der Anmeldung:
**22.04.92 Patentblatt 92/17**

(84) Benannte Vertragsstaaten:
**BE DK ES FR GB IT NL**

(71) Anmelder: **Klöckner Ferromatik Desma GmbH
Riegeler Strasse 4
W-7831 Malterdingen(DE)**

(72) Erfinder: **Oster, Lothar
Verdener Strasse 35
W-2807 Achim(DE)**

(74) Vertreter: **Röther, Peter, Dipl.-Phys.
Patentabteilung, Klöckner-Werke AG,
Klöcknerstrasse 29
W-4100 Duisburg 1(DE)**

(54) **Vorrichtung zum Sprühen von flüssigen Medien.**

(57) Bei einer Vorrichtung zum Sprühen von flüssigen Medien, insbesondere von Trennmitteln in Formen zum Anspritzen bzw. Anformen von Schuhsohlen an Schuhschäfte, mit einer Mehrzahl von Sprühlanzen (12), bestehend jeweils aus einem Sprühlanzenkörper und einem Sprühkopf (31) mit mindestens einer Düse (54), deren Sprühvorrichtung auf die jeweils zu besprühende Formenregion einstelltbar ist, ist erfindungsgemäß vorgesehen, daß jede Sprühlanze (12) für sich mit einer eigenen Dosier- und Sprühsteuereinrichtung mit eigenem Absperrorgan (26) versehen ist, wobei alle Versorgungsleitungen durch die dem Sprühkopf (31) abgewandte Stirnseite in die jeweiligen Sprühlanzenkörper eingeführt sind.

Fig. 3

Die Erfindung betrifft eine Vorrichtung zum Sprühen von flüssigen Medien, insbesondere von Trennmitteln in Formen zum Anspritzen bzw. Anformen von Schuhsohlen an Schuhschäfte, mit einer Mehrzahl von Sprühlanzen, bestehend jeweils aus einem Sprühlanzenkörper und einem Sprühkopf mit mindestens einer Düse, deren Spührichtung auf die jeweils zu besprühende Formregion einstellbar ist.

In der modernen Schuhfabrikation, die weitgehend automatisiert ist, werden beispielsweise auf sogenannten Rundtischanlagen in kurzer Taktzeit die fertigen Schäfte mit Sohlen versehen. Hierzu verfügt die Rundtischanlage über eine Vielzahl von Formstationen, wobei jede Form über einen Bodenstempel, einen geteilten Formenrahmen und den mit dem Schaft überzogenen Leisten, der die Form von oben schließt, verfügt. Bei dieser Art der Form muß vor dem Einbringen des Sohlenmaterials jede Formfläche mit Ausnahme des Leistenbereichs mit einem Trennmittel besprüht werden, damit die Sohle problemlos entformt werden kann.

Soll jedoch eine zweifarbige, d.h. zweilagige Sohle angespritzt werden, wird beim Spritzen der ersten Schicht die Form von oben mit Hilfe eines sogenannten Verdrängers geschlossen, der ebenfalls vor dem Eindringen des Sohlenmaterials mit einem Trennmittel besprüht werden muß. Sobald die erste Lage der Sohle geformt ist, wird der Verdränger entfernt und durch den Leisten ersetzt, wobei nun lediglich die seitlichen Formteile mit dem Trennmittel besprüht werden müssen. Anderenfalls würden die beiden Sohlenlagen nicht aufeinanderhaften. Bei allen Spritzvorgängen muß auch der Angußbereich an der Frontfläche der Form besprüht werden.

Hierzu wird eine Trennmittelsprühvorrichtung benutzt, die aus mehreren Sprühlanzen mit daran angeschlossenen Sprühköpfen besteht. Vor dem Zufahren der Form wird die Vorrichtung in die Bereitschaftsstellung gefahren. Je nach den Anforderungen (Einfarben-Direktansohlen, Zweifarben-Direktansohlen, Anformen von Gummi-PUR-Sohlen oder Einfarben-PUR-Formsohlen) werden jeweils nur bestimmte Düsen zum Sprühen benötigt. Bei den bisherigen Trennmittelsprühvorrichtungen werden alle Sprühlanzen bzw. die Düsen durch ein gemeinsames Absperrorgan auf- und zugeschaltet, und es wird durch eine gemeinsame Mengenregulierung die Austrittsmenge eingestellt. Somit ist es unerläßlich, daß abhängig von der anzuformenden Sohle die eine oder andere Düse aus der Vorrichtung entfernt werden muß. Das führt zu erheblichen Todzeiten durch Aus- und Wiedereinbau der benötigten Sprühlanzen.

Ein weiterer Nachteil dieser bekannten Vorrichtungen liegt daran, daß der Weg vom gemeinsamen Absperrorgan bis zur Düsenöffnung relativ lang ist, was dazu führt, daß nach Abschalten des Absperrorgans das Trennmittel aus der Düse nachtropfen kann. Dies wiederum führt dazu, daß die unbeabsichtigt z.B. auf die bereits vorgeformte erste Lage einer Sohle hinuntergetropfte kleine Sprühmittelmenge bedingt, daß im anschließenden Formen der zweiten Sohlenschicht eine vollflächige Verbindung der beiden Schichten verhindert wird.

Ein dritter Nachteil der bekannten Vorrichtung ist darin zu sehen, daß durch das gemeinsame Absperrorgan und die gemeinsame Mengenregulierung eine Feinstdosierung praktisch nicht möglich ist.

Der Erfindung liegt daher die Aufgabe zugrunde, eine Vorrichtung der eingangs genannten Art zu schaffen, die es erlaubt, ein flüssiges Medium, insbesondere ein umweltfreundliches, FCKW-freies Trennmittel, feinstdosiert auf einfache Weiche den jeweiligen Gegebenheiten und Formen angepaßt zu versprühen.

Die Erfindung löst diese Aufgabe dadurch, daß jede Sprühlanze für sich mit einer eigenen Dosier- und Sprühsteuereinrichtung mit eigenem Absperrorgan versehen ist, wobei alle Versorgungsleitungen durch die dem Sprühkopf abgewandte Stirnseite in den jeweiligen Sprühlanzenkörper eingeführt sind.

Mit Hilfe des ersten Merkmals ist es nun möglich, die Vorrichtung ohne Umbau, allein durch eine andere geeignete Ansteuerung auf den jeweiligen Einsatzzweck einzustellen. Dadurch, daß jede Sprühlanze mit einer eigenen Dosiereinrichtung versehen ist, läßt sich die Sprühmittelmenge genau einstellen, die für den jeweiligen Formenbereich benötigt wird. Durch die Anordnung des Absperrorgans in jeder Sprühlanze ergeben sich kurze Wege von Absperrorgan bis zur Düsenöffnung, so daß sich zum einen ein exakteres Schalten ergibt und zum anderen die Gefahr des Nachtropfens entscheidend verringert wird.

Durch das zweite Merkmal des Anspruchs 1, daß nämlich die Zuführleitungen für das Sprühmittel, die Sprühluft und die Luft zur Betätigung des Absperrorgans von hinten in den Lanzenkörper eingeführt sind, lassen sich mehrere Sprühlanzen auf engstem Raume zusammenfassen, was z.B. bei den bekannten Sprühpistolen, bei denen die Zuleitungen seitlich in das Pistolengehäuse münden, nicht möglich ist.

Vorteilhafterweise werden die Sprühlanzen gemäß Anspruch 2 programmgesteuert. Somit braucht vor dem Arbeitsgang nur das jeweils benötigte Programm gewählt zu werden, das dann nur die benötigten Sprühköpfe aktiviert.

Als Absperrorgan wird gemäß dem Ausführungsbeispiel des Anspruchs 3 in dem Lanzenkörper vor dem Düsensitz im Sprühmittelkanal ein druckmittelzylinderbetätigtes Nadelventil vorgesehen. Neben dem oben angesprochenen Vorteil des kurzen Weges der Sprühmitteldosis vom Absperrorgan zur Düsenöffnung hat der Einsatz eines Nadelventils den Vorteil, daß ein exaktes Öffnen und Schließen des Sprühmittelkanals gewährleistet wird, was einer genauen Dosierung zugute kommt.*

Gemäß dem Merkmal des Anspruchs 4 ist das Nadelventil durch eine Feder gegen den Ventilsitz vorgespannt. Das heisst, daß nach dem Unwirksamwerden des Druckmittelzylinders das Nadelventil von selbst den Sprühmittelkanal schließt.

Eine besonders einfache Ausführung des Nadelventils ist durch den Anspruch 5 gegeben. Kolben, Kolbenstange und das durch die Kolbenstange gebildete Nadelventil sind somit als ein Bauteil ausgeführt.

Der Anspruch 6 sieht vor, daß die erfindungsgemäßen Düsen nach dem elektrostatischen Prinzip arbeiten können. Es ist zwar bereits bekannt, daß an der Düsenöffnung eine nadelförmige Elektrode vorgesehen ist, die den an ihr vorbeistreichenden Sprühstrahl, d.h. die Trennmittelteilchen, elektrisch auflädt. Das Prinzip des elektrostatischen Trennmittelsprühens beruht auf der Zerstäubung und dem Transport elektrisch geladener Trennmittelteilchen bei sehr hohen Gleichspannungen, jedoch bei niedriger, ungefährlicher Stromstärke von nur wenigen Mikroampere. Das Trennmittel wird beim Verlassen der Sprühdüse negativ aufgeladen. Es entstehen Feldlinien zur Oberfläche des Werkstückes, in diesem Fall der Form, das geerdet ist. Die Trennmittelteilchen folgenden diesen Feldlinien. Da sie gleichpolig geladen sind, stoßen sie sich im Fluge voneinander ab. Dadurch entsteht ein homogener Trennmittelnebel, der sich außerordentlich gleichmäßig auf dem gegenpoligen Werkstück niederschlägt. Bei der bekannten Art der elektrostatischen Aufladung wird jedoch nur ein geringer Teil der Trennmittelteilchen erfaßt. Dadurch, daß gemäß dem Merkmal des Anspruchs 6 der metallische Düsenkörper selbst die Elektrode darstellt, ist die Aufladung des Düsenstrahls intensiver. Durch die direkte Berührung werden mehr Trennmittelteilchen aufgeladen, wodurch eine bessere Vernebelung erreicht wird. Das hat zur Folge, daß die Menge des Trennmittels noch reduziert wird. Es wird eine Einsparung von ca. 80% erreicht.

Der Anspruch 7 gibt eine vorteilhafte Möglichkeit an, wie die elektrische Energie (die Hochspannung) an den metallischen Düsenkörper angelegt werden kann. Die von außen kommende Hochspannungsleitung wird ebenfalls wie die anderen Zuführungen von hinten in den Sprühlanzenkörper eingeführt und kann bei Bedarf ebenso schnell wieder entfernt werden.

Durch das Merkmal des Anspruchs 8 ergibt sich der Vorteil, daß beim Einsetzen des jeweils benötigten Sprühkopfes sofort ein inniger elektrischer Kontakt hergestellt wird. zusätzlich ergibt sich durch die gegen den Sprühkopf wirkende Federkraft eine sichere Einspannung desselben im Kopfstück der Sprühlanze.

Durch das Merkmal des Anspruchs 9 ergibt sich eine weitere Vereinfachung des inneren Aufbaus der Sprühlanze. Das Verschlußstück erfüllt gleichzeitig zwei Aufgaben. Neben der Aufgabe des Verschließens des Druckmittelzylinders erfüllt es die Aufgabe eines Widerlagers für die den Druckmittelzylinderkolben und damit das Nadelventil vorspannende Feder. Gleichzeitig dient das Verschlußstück zur Aufnahme der Gewindehülse für den Stecker der Hochspannungszuleitung.

Das Merkmal des Anspruchs 10 gibt eine einfache Möglichkeit zur Fixierung des Sprühkopfes in der Sprühlanze an. Der Sprühkopf wird gegen die Kontaktfedern in die Sprühlanze eingeführt. Sodann wird die Platte so auf der Stirnseite der Sprühlanze verschraubt, daß die Ränder der Aussparung in einer entsprechenden Ringnut am Sprühkopf eingreifen. Somit ist neben der bereits oben angeführten guten Verspannung des Sprühkopfes in der Sprühlanze ein schneller Wechsel des Sprühkopfes gewährleistet.

Um den Sprühkopf bei radialer Einstellung desselben in eine definierte Lage bringen zu können, sieht der Anspruch 11 vor, daß am düsenseitigen Ende der Sprühlanze eine vorspringende schneidenförmige Raste angeordnet ist, deren Schneide mit entsprechenden Rastelementen am Umfang des Sprühkopfanschlußteils zusammenwirkt.

Um zu einer noch feineren Dosierung des benötigten Sprühmittels zu kommen, ist gemäß Anspruch 12 in jedem Sprühkopf zusätzlich eine als Nadelventil aufgebildete, einstellbare Drossel vorgesehen. Diese Drossel ersetzt die bisher übliche Feineinstellung, die zwischen Sprühmitteltank und Sprühmittelvorrichtung angeordnet war. Hierdurch wird die benötigte Menge des Trennmittels weiter reduziert und ein Nachtropfen praktisch ausgeschlossen.

Ein Ausführungsbeispiel der Erfindung wird im folgenden anhand von Zeichnungen dargestellt und näher erläutert.

Es zeigen:

Fig. 1   in Vorderansicht eine erfindungsgemäße Trennmittelsprühvorrichtung in einer im Schnitt dargestellten Form,

Fig. 2   in Seitenansicht eine Sprühlanze im Angußbereich der Form,

Fig. 3   einen Sprühlanzenkörper im Längsschnitt,

Fig. 4   einen Sprühlanzenkörper gemäß Fig. 3, zu diesem um 90° um die Längsachse gedreht,

Fig. 5   einen Sprühkopf im Längsschnitt.

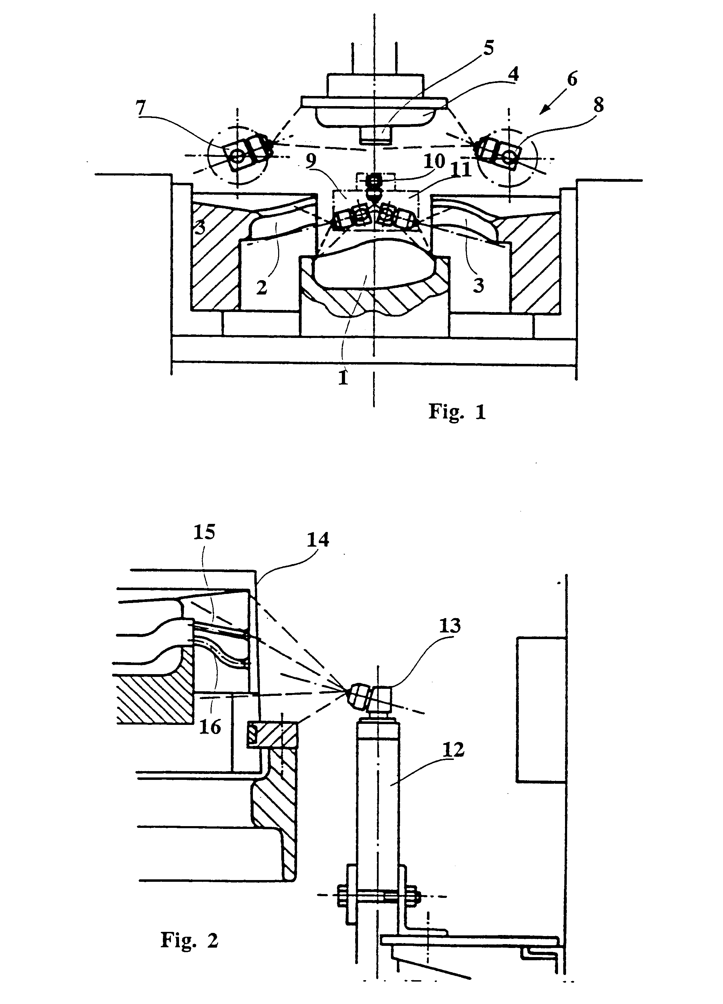

Die Fig. 1 zeigt im Prinzip eine Formstation für eine Laufsohle. Sie besteht aus einem Bodenstempel 1, den Seitenformteilen 2 und 3 sowie aus einem sogenannten Verdränger 4. An dem Verdränger 4 befindet sich mittig ein Stempel 5, der eine Aussparung in der fertiggeformten Laufsohle hinterläßt. Vor dem Zufahren der Formteile wird eine allgemein mit dem Bezugszeichen 6 versehene Trennmittelsprühvorrichtung in die Form eingefahren. Seitlich wird der Verdränger 4 und der Stempel 5 von zwei in Stirnansicht dargestellten Sprühlanzen 7 und 8 bestrichen, während der Bodenstempel 1 und die Formseitenteile 2 und 3 durch eine aus drei Sprühlanzen 9, 10, 11 bestehenden Kombination mit Trennmittel besprüht wird.

In der Fig. 2 ist die oben dargestellte Form im seitlichen Schnitt dargestellt. Vor der Form ist vertikal eine weitere Sprühlanze 12 mit einem Sprühkopf 13 angeordnet, der den Angußbereich 14 mit seinen Angußkanälen 15 und 16 versorgt.

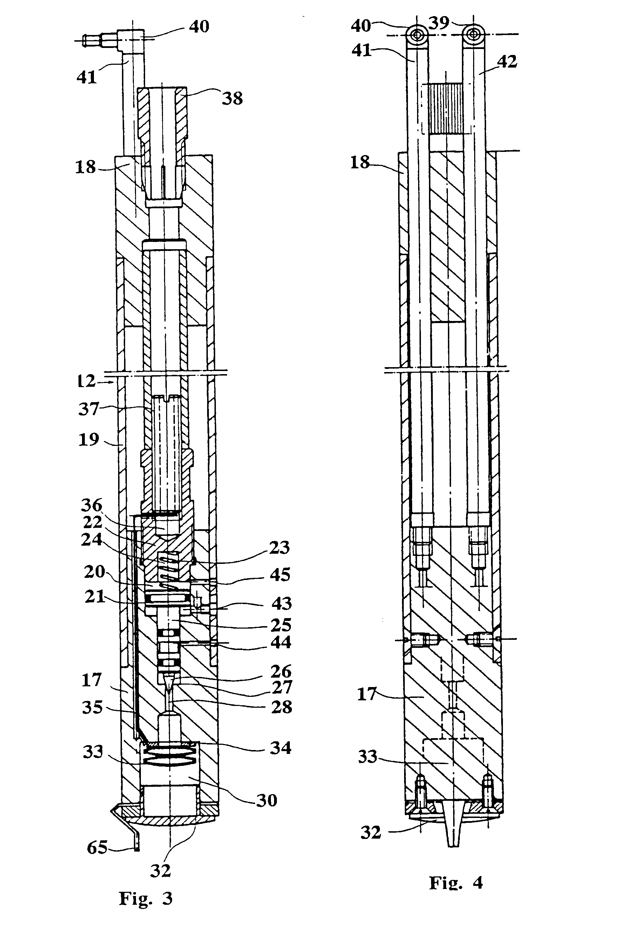

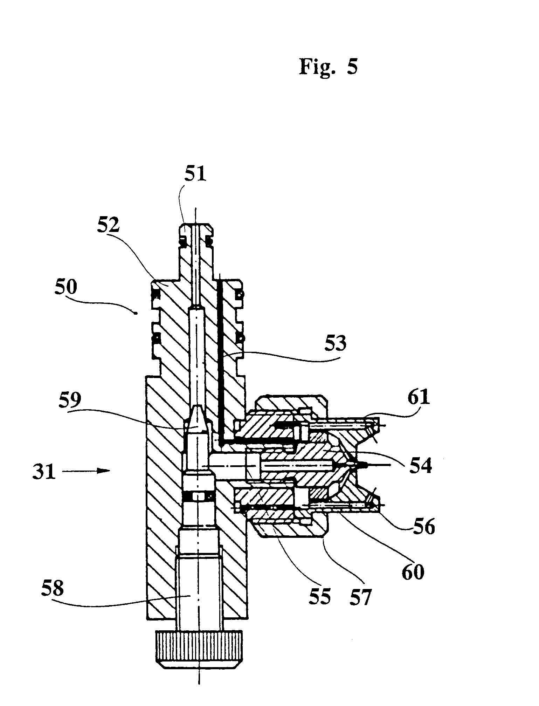

In den Figuren 3 bis 6 ist ein Sprühlanzenkörper 12' im Detail dargestellt. Der Sprühlanzenkörper 12 besteht aus einem Kopfstück 17 und einem Endstück 18, die durch ein Schutzrohr 19 miteinander verbunden sind. Alle Teile bestehen aus einem geeigneten Kunststoff. Das Kopfstück 17 weist in seinem zum Endstück 18 weisenden Teil eine zylindrische Bohrung 20 auf, die sich im Mittelbereich des Kopfstücks mit geringerem Durchmesser fortsetzt. Der so gebildete Raum dient als Führung für einen pneumatisch betätigbaren Kolben 21, sowie zur Aufnahme eines von der Endstückseite her eingeführten Verschlußdeckels 22. Die kolbenseitige Stirnseite des Verschlußdeckels 22 dient als Anschlag für den Kolben 21. Die Kolbenfläche stützt sich auf einer Feder 23 ab, die in einer Sacklochbohrung 24 im Verschlußstück 22 gelagert ist. Die Kolbenstange 25, die in dem Teil des Raumes 20 geführt ist, der über einen geringeren Durchmesser verfügt, endet in einer konischen Spitze 26. Die konische Spitze 26 bildet das Absperrteil eines Nadelventils, dessen Ventilsitz 27 durch den Rand einer schmalen Bohrung 28 gebildet ist, die sich in ihrem Verlauf auf das kopfstückseitige Ende der Sprühlanze auf den Durchmesser des die Kolbenstange führenden Zylinderraums aufweitet. Dieser Teil ist mit dem Bezugszeichen 29 versehen. Der Kanal 29 mündet in einem Aufnahmeraum 30 für den in Fig. 5 dargestellten Sprühkopf 31. Der Aufnahmeraum 30 ist bei entferntem Sprühkopf mit einem Schutzdeckel 32 verschlossen. Im Bereich der Mündung des Kanals 29 sind hintereinander vier metallische Spannscheiben 33 angeordnet, die gegen einen Kontaktring 34 anliegen. Von dem Kontaktring 34 bzw. den Spannscheiben 33 führt durch das Kopfstück 17 ein Draht 35, der in Höhe der Mitte des Verschlußstücks 22 rechtwinklig abgebogen ist und in eine Sacklochbohrung 36 im Verschlußstück 22 hineinreicht. In der Bohrung 36 sitzt eine Hülse 37, die über ein Innengewinde verfügt. Durch einen Stutzen 38 am endstückseitigen Ende der Sprühlanze 12 wird ein nicht dargestelltes Hochspannungskabel in den Sprühlanzenkörper 12 eingeführt. Der ebenfalls nicht dargestellte Stecker des Kabels wird in die Hülse 37 eingedreht, wobei die Kontaktspitze des Steckers das Ende des Drahtes 35 in der Sacklochbohrung 36 des Verschlußstücks 22 verquetscht. Mit den Bezugszeichen 39 und 40 sind die Anschlußnippel für die Zuleitungen des Sprühmittels und der Sprühluft sowie der Luft zur Betätigung des Kolbens 21 bezeichnet. Von ihnen führen schlauchförmige Leitungen 41 und 42 stirnseitig in den Sprühlanzenkörper 12 und enden im Zylinderraum 20. In der Fig. 1 ist die Einmündung mit den Bezugszeichen 43 versehen. Von dort strömt sowohl das Trennmittel als auch die zugeführte Luft an der Kolbenstange 25 vorbei zum Ventil 27. Sowohl die Kolbenstange 25 als auch der Kolben 21 ist mit Hilfe von O-Ringen gegen die Zylinderwand abgedichtet. Vor und hinter dem Kolben 21 führen Kontrollbohrungen 44 und 45 aus dem Zylinderraum nach außen. Ist vor oder hinter dem Kolben eine Undichtigkeit gegeben, kann dieses sofort anhand des heraustropfenden Sprühmittels festgestellt werden. Die Sprühlanze wird dann abgeschaltet.

In der Fig. 5 ist ein erfindungsgemäßer Sprühkopf 31 dargestellt. Er besteht aus einem Anschlußteil 50, der im eingebauten Zustand in dem Aufnahmeraum 30 und mit seinem Fortsatz 51 im Kanal 29 steckt. In der Ringfläche 52 mündet ein Draht 53, der sich an die Spannscheiben 33 anlegt und einen elektrischen Kontakt herstellt. Der Draht 53 führt im rechten Winkel zum metallischen Düsenkörper 54, der in einer Aufnahme im Sprühmittelkanal 55 sitzt. Der Düsenkörper 54 wird von einem Gehäuse 56 umgeben, welches mit einer Überwurfmutter 57 am Sprühkopfkörper befestigt ist. Durch die hier dargestellte Anordnung des Düsenkörpers 54 bildet die Sprührichtung zur Längsache der Sprühlanze 12 einen rechten Winkel. Es sind aber auch andere Winkel denkbar. Im Sprühkopf 31, und zwar fluchtend mit der Längsachse der Sprühlanze 12, ist eine allgemein mit dem Bezugszeichen 58 bezeichnete Drossel angeordnet, die mit Hilfe des Nadelventils 59 eine Feinstregulierung des ankommenden Sprühmittels ermöglicht. Seitliche Luftführungskanäle 60 und 61, die an gegenüberliegenden Rändern des Gehäuses 56 in einem stumpfen Winkel aufeinandertreffen, dienen dazu, den an sich konischen Sprühstrahl in eine elliptische Form zu drücken.

Die Wirkungsweise der erfindungsgemäßen Vorrichtung wird im folgenden beschrieben:
Die benötigten Sprühlanzen 12 werden, wie in den Fig. 1 und 2 dargestellt, zusammengesellt. Die Sprühköpfe werden entsprechend ausgerichtet, wobei eine Rasteinrichtung hilfreich ist, die aus einer schneidenförmigen Raste 65 am Sprühlanzenkörper 12 und einem geriffelten Ring (nicht dargestellt) auf dem Sprühkopfgehäuse gebildet ist.

Vor dem Spritzvorgang wird die Sprühlanzenkombination in bzw. vor die Form gefahren. Je nach Einsatzzweck und Formengröße werden nun die gewünschten Sprühlanzen betätigt. Dabei läßt sich mit Hilfe eines rechnergestützten Programmes sowohl die Sprühzeit als auch die Sprühmenge individuell für jede Lanze einstellen. Feinstdosierungen werden mit Hilfe der Drossel 58 durchgeführt. Beim Sprühen liegt am Düsenkörper 54 eine Hochspannung an, so daß die austretenden Trennmittelteilchen fast vollständig elektrisch negativ aufgeladen sind, sich im Flug gegenseitig abstoßen und so zu einer guten Vernebelung führen.

**Patentansprüche**

1. Vorrichtung zum Sprühen von flüssigen Medien, insbesondere von Trennmitteln in Formen zum Anspritzen bz. Anformen von Schuhsohlen an Schuhschäfte, mit einer Mehrzahl von Sprühlanzen, bestehend jeweils aus einem Sprühlanzenkörper und einem Sprühkopf mit mindestens einer Düse, deren Sprührichtung auf die jeweils zu besprühende Formregion einstellbar ist,
dadurch gekennzeichnet,
daß jede Sprühlanze (12) für sich mit einer Dosier- und Sprühsteuereinrichtung mit eigenem Absperrorgan (26) versehen ist, wobei alle Versorgungsleitungen (41,42) durch die dem Sprühkopf (31) abgewandte Stirnseite in die jeweiligen Sprühlanzenkörper (12) eingeführt sind.

2. Vorrichtung nach Anspruch 1,
dadurch gekennzeichnet,
daß die Dosier- und Sprühsteuereinrichtungen programmgesteuert sind.

3. Vorrichtung nach Anspruch 1 oder 2,
dadurch gekennzeichnet,
daß im jeweiligen Lanzenkörper (12) vor dem Düsensitz (30,29) im Sprühmittelkanal (28) ein durch einen Druckmittelzylinder (20) betätigtes Nadelventil (26) vorgesehen ist.

4. Vorrichtung nach Anspruch 3,
dadurch gekennzeichnet,
daß das Nadelventil (26) durch eine Feder (23) gegen den Ventilsitz (27) vorgespannt ist.

5. Vorrichtung nach Anspruch 3 oder 4,
dadurch gekennzeichnet,

daß das Nadelventil (26) durch die Kolbenstange (25) des Kolbens (21) des Druckmittelzylinders (20) gebildet ist.

6. Vorrichtung nach einem oder mehreren der Ansprüche 1 bis 5,
dadurch gekennzeichnet,
daß an den metallischen Düsenkörper (54) eine elektrische hochspannung anlegbar ist.

7. Vorrichtung nach Anspruch 6,
dadurch gekennzeichnet,
daß zur Zuführung der elektrischen Spannung ein Hochspannungskabel axial in den Sprühlanzenkörper (12) eingeführt ist, dessen Kontaktstecker in eine Gewindehülse (37) einschraubbar ist, in die radial das Ende eines Leitungsdrahtes (35) hineinreicht, der beim Einschrauben durch den Stecker in der Gewindehülse (37) verquetscht wird und von dort in Richtung Sprühkopf (31) geführt ist und in einer Kontaktfläche (33,34) endet, an die sich der entsprechende Gegenkontakt in (53) im Sprühkopf (31) anlegt, der mit dem metallischen Düsenkörper (54) verbunden ist.

8. Vorrichtung nach Anspruch 7,
dadurch gekennzeichnet,
daß die Kontaktfläche durch ein Federelement (33) gebildet ist, gegen dessen Federkraft der Sprühkopf (31) in den Lanzenkörper (12) einschiebbar und verriegelbar ist.

9. Vorrichtung nach Anspruch 7 oder 8,
dadurch gekennzeichnet,
daß die Gewindehülse (37) in einer Sacklochbohrung (36) eines Verschlußstücks (22) sitzt, das den Zylinderraum (20) des das Nadelventil (27) betätigenden Druckmittelzylinders abschließt und gleichzeitig als Sitz und Widerlager für die Feder (23) dient.

10. Vorrichtung nach einem oder mehreren der Ansprüche 1 bis 9,
dadurch gekennzeichnet,
daß an der düsenseitigen Stirnfläche des Lanzenkörpers (12) eine diese verschließende Platte angebracht ist, die einen U-förmigen Ausschnitt aufweist, dessen Rand in einer Ringnut im Sprühkopfanschlußteil (50) sitzt, der in den Lanzenkörper (12) eingeführt ist und sich gegen das Federelement (33) anlegt.

11. Vorrichtung nach einem der Ansprüche 1 bis 10,
dadurch gekennzeichnet,
daß am düsenseitigen Ende der Sprühlanze (12) eine vorspringende, schneidenförmige Raste (65) angeordnet ist, deren Schneide mit entsprechenden Rastelementen am Umfang des Sprühkopfanschlußteils (50) zusammenwirkt.

12. Vorrichtung nach einem der Ansprüche 1 bis 11,
dadurch gekennzeichnet,
daß im Sprühkopf (31) eine als Nadelventil (59) ausgebildete, einstellbare Drossel (58) vorgesehen ist.

Fig. 1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-2 620 708   (H.W.HAPKE & CO)<br>* das ganze Dokument * *<br>– – – | 1-5 | B 05 B 7/12<br>B 05 B 5/053<br>B 29 C 45/83 |
| Y | GB-A-2 199 263   (OSKAR FRECH GMBH)<br>* Seite 5, Zeile 15 - Seite 6, Zeile 35; Abbildungen 1,2 * *<br>– – – | 1-5 | |
| A | PATENT ABSTRACTS OF JAPAN vol. 6, no. 224 (M-170)(1102) 9. November 1982<br>& JP-A-57 128 509 ( KAO SEKKEN K.K. ) 10. August 1982<br>* Zusammenfassung * *<br>– – – | 6 | |
| A | GB-A-1 180 746   (JACO ENGINEERING DEVELOPMENTS COMPANY LIMITED)<br>* Seite 2, Zeile 125 - Seite 3, Zeile 58; Abbildung 3 * *<br>– – – – – | 1,3-5,12 | |
| | | | **RECHERCHIERTE SACHGEBIETE (Int. Cl.5)**<br><br>B 05 B<br>B 29 C |

Der vorliegende Recherchenbericht wurde für alle Patentansprüche erstellt

| Recherchenort | Abschlußdatum der Recherche | Prüfer |
|---|---|---|
| Den Haag | 14 Januar 92 | JUGUET J.M. |